# FASCICULE DE BREVET EUROPEEN

(11) **EP 1 861 636 B1**
(45) Date de publication et mention de la délivrance du brevet: **05.01.2011**
(21) Numéro de dépôt: 06726201.4
(22) Date de dépôt: 28.02.2006
(51) Int. Cl.: F16H 59/02

(54) **DISPOSITIF DE COMMANDE DEPORTEE D'UNE BOITE DE VITESSES AUTOMATIQUE PERMETTANT UNE COMMANDE MANUELLE**
VORRICHTUNG ZUR VERSATZSTEUERUNG EINES AUTOMATIKGETRIEBES MIT MANUELLER STEUERUNG
DEVICE FOR OFFSET CONTROL OF AN AUTOMATIC GEARBOX ALLOWING MANUAL CONTROL

(30) Priorité: 17.03.2005 FR 0502637
(43) Date de publication de la demande: 05.12.2007
(73) Titulaire: RENAULT S.A.S., 92100 Boulogne Billancourt (FR)
(72) Inventeur: MAILLARD, Jean-Pierre, F-78790 Septeuil (FR); PAVEC, Elisabeth, F-92000 Nanterre (FR)
(74) Mandataire: Rougemont, Bernard
(86) Numéro de dépôt international: PCT/FR2006/050177
(87) Numéro de publication internationale: WO 2006/097648

(56) Documents cités:
- EP-A- 1 452 782
- FR-A- 2 625 143
- FR-A- 2 797 229
- FR-A- 2 856 961
- US-A- 5 682 789

## Description

### DOMAINE TECHNIQUE DE L'INVENTION

La présente invention concerne un dispositif de commande d'une boîte de vitesses automatique de véhicule automobile. L'invention concerne plus particulièrement un dispositif de commande déportée d'une boîte de vitesses automatique permettant une commande manuelle, avec un levier de changement de vitesses à planche de bord.

Par rapport au dispositif de commande de vitesses implanté sur une console centrale située plus bas que la planche de bord, la disposition à la planche de bord peut poser des problèmes de style ou de design de la planche de bord, en raison notamment de l'encombrement du mécanisme servant à transmettre le mouvement de la main du conducteur à la boîte de vitesse. Il existe donc un besoin de déporter ce mécanisme, pour concilier ergonomie de commande, style harmonieux des formes du poste de conduite, et en conservant la fonctionnalité commande de vitesse pour les boîtes de vitesses automatiques.

### ARRIERE-PLAN TECHNOLOGIQUE DE L'INVENTION

Dans les véhicules motorisés les plus récents, il est connu des dispositifs de commande d'une boîte de vitesses automatique dont le levier de changement de vitesses est monté sur la planche de bord. Ce levier pivote autour d'un premier axe sur un support pivotant lui-même autour d'un second axe sur un bâti porté par le véhicule.

Les publications FR 2 849 809 et FR 2 856 960 du même demandeur décrivent un dispositif du type indiqué ci-dessus avec un encombrement vertical réduit et ayant un débattement ergonomique du levier de façon à ce que la partie préhensible du levier de vitesses soit à portée de la main du conducteur, quel que soit le rapport engagé. Ce type de dispositif à la planche de bord permet au conducteur, dont le bras est alors sensiblement horizontal, de n'exercer qu'un effort horizontal et non pas un effort vertical vers le haut ou vers le bas, en "cassant" son poignet. La publication EP 1 452 782 décrit un dispositif selon les caracteristiques du préambule de la revendication 1.

Toutefois, ce type de dispositif n'offre pas la possibilité au conducteur d'intervenir sur la commande des vitesses de façon manuelle et rapide, par exemple par une commande de type impulsionnelle. Ce type de dispositif ne prévoit pas davantage la possibilité de passer rapidement d'un mode de commande à un autre ni l'actionnement d'un verrouillage ou une protection autorisant à sortir de la position Parking seulement après appui sur le frein.

### DESCRIPTION GENERALE DE L'INVENTION

La présente invention a donc pour objet de pallier un ou plusieurs des inconvénients de l'art antérieur en proposant un dispositif de commande externe de boîte de vitesses offrant au conducteur le choix entre deux types de commande des vitesses.

Un objectif supplémentaire de l'invention est de proposer un agencement de faible encombrement pour passer d'un mode de commande automatique à un mode de commande manuelle et vice versa. selon la revendication 1.

Ainsi, le dispositif selon l'invention assure un débrayage du câble pour passer à un mode de commande non automatique, comme par exemple une commande manuelle impulsionnelle. En outre, le dispositif est compact, le levier, les deux biellettes arrière et avant et le support formant un quadrilatère déformable selon un encombrement vertical réduit.

Selon une autre particularité, la première biellette comporte une première extrémité fixée à une partie d'extrémité avant du levier et une seconde extrémité opposée par laquelle la première biellette entraîne le moyen de renvoi, ladite extrémité d'accrochage comportant une portion en U en saillie pour recevoir la seconde extrémité de la première biellette dans la position d'engagement.

Selon une autre particularité, les branches de la portion en U ont un écartement déterminé pour permettre l'engagement de ladite seconde extrémité avec les zones de contact intérieures de la portion en U de l'extrémité d'accrochage, l'épaisseur de la portion en U et l'épaisseur de la seconde extrémité étant sensiblement égales.

Selon une autre particularité, le moyen de renvoi comporte une portion principale solidaire d'une rotule de fixation de l'organe de transmission et agencée en vis-à-vis de l'extrémité d'accrochage, la portion principale et l'extrémité d'accrochage étant reliées par une partie incurvée et formées d'une seule pièce, la partie incurvée étant agencée pour maintenir un espacement déterminé qui est suffisant pour permettre dans la position de désengagement un libre mouvement de rotation de la seconde extrémité de la première biellette entre la portion principale et la portion en U du moyen de renvoi, ledit espacement étant au moins le double de l'épaisseur de la portion en U.

Selon une autre particularité, l'organe de transmission est un câble prévu pour transmettre, via le moyen de renvoi actionnable lorsque la première biellette est dans ladite position d'engagement, une information de position longitudinale du levier correspondant à une des positions suivantes : stationnement, marche arrière, point mort et conduite automatique.

Selon une autre particularité, le support monté pivotant par rapport au bâti est muni d'un système à came entraîné via les biellettes par un mouvement transversal du levier, le système à came incluant une patte en saillie déplaçable verticalement entre une position inférieure et une position supérieure, le bâti comportant un bras muni d'un système de marquage de position de la patte.

Ainsi, l'invention assure avantageusement une délimitation sensible pour le conducteur entre deux positions distinctes interchangeables par action transversale sur le levier, ces positions pouvant correspondre à la position manuelle M et à la position de conduite automatique D ("drive").

Selon une autre particularité, le système de marquage de position de la patte comprend à l'extrémité du bras un organe de billage en vis-à-vis de la patte agencé pour venir respectivement en appui sur l'une ou l'autre de deux zones concaves distinctes adjacentes formées à l'extrémité de ladite patte.

Selon une autre particularité, le moyen de renvoi est solidaire de moyens de blocage en rotation actionnés par des organes de commande de type mécanique et/ou électromécanique.

Ainsi, le dispositif de l'invention dispose d'un verrouillage pour certains changements de position du levier de manoeuvre.

Selon une autre particularité, lesdits moyens de blocage en rotation comprennent une patte à au moins quatre crans, solidaire de la portion principale du moyen de renvoi, le levier étant muni d'une gâchette pour tirer un câble d'actionnement d'un élément de verrouillage dont une extrémité est mobile entre une position de verrouillage entre deux crans de la patte et une position de libération lorsque le câble est tiré par la gâchette.

Selon une autre particularité, lesdits moyens de blocage en rotation comprennent une patte solidaire de la portion principale du moyen de renvoi, munie d'au moins une rainure ou lumière pour recevoir un doigt de blocage actionné par un système d'électro-aimant du type recevant des commandes électriques représentatives de freinage.

Ainsi, le dispositif peut comporter une protection de type « shiftlock » qui interdit de sortir d'une position déterminée, par exemple la position de stationnement appelée parking, sans appuyer sur le frein.

Selon une autre particularité, ladite patte comprend entre deux crans respectifs des positions de verrouillage successives correspondant à chacune des positions successives suivantes : stationnement, marche arrière, point mort et conduite automatique ; la patte comprenant une lumière prévue pour recevoir le doigt de blocage et délimiter la course de la patte par au moins une surface de butée pour le doigt de blocage dans la position de passage de la position de stationnement à la position marche arrière, un trou ou lumière supplémentaire étant prévue pour recevoir le doigt de blocage dans la position de verrouillage correspondant à la position de stationnement.

Selon une autre particularité, les crans de la patte sont chanfreinés pour faciliter la rotation de la patte dans le sens opposé à l'enclenchement de la position de verrouillage correspondant à la position de stationnement.

L'invention, avec ses caractéristiques et avantages, ressortira plus clairement à la lecture de la description faite en référence aux dessins annexés dans lesquels :
- la figure 1 est une vue en perspective de trois quarts avant illustrant un dispositif de commande selon l'invention ;
- la figure 2 montre une grille d'une boîte de vitesses automatique selon un mode de réalisation de l'invention ;
- la figure 3 est une vue partielle du dispositif de la figure 1 illustrant la fonction de débrayage d'un câble de transmission permise selon l'invention ;
- la figure 4 est une vue partielle en perspective avant du dispositif de la figure 1 ;
- la figure 5 est une vue arrière du dispositif de la figure 1 illustrant des protections par blocage de certains passages de positions.

### DESCRIPTION DES MODES DE REALISATION PREFERES DE L'INVENTION

Dans la description qui suit, des éléments identiques, analogues ou similaires seront désignés par les mêmes références.

On a représenté sur les figures l'ensemble d'un dispositif de commande d'une boîte de vitesses de véhicule automobile selon un mode de réalisation préféré de l'invention.

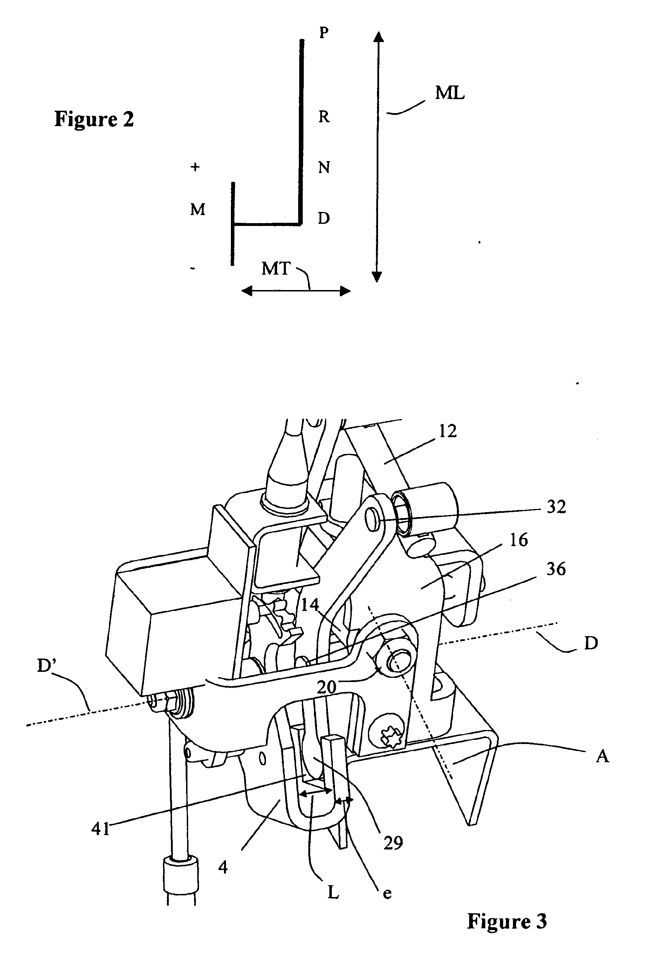

De manière connue, le dispositif comporte un levier (12) de changement de vitesses qui est monté pivotant autour d'un premier axe (I), sensiblement transversal par rapport à une direction (V) longitudinale du véhicule. De manière connue, et comme on le verra plus en détail dans la suite de la présente description, le premier axe "I" correspond à un axe théorique instantané de rotation autour duquel s'effectue le mouvement de pivotement du levier (12) autour de la direction transversale. Le levier (12) est aussi monté sur un support (14) qui est monté pivotant autour d'un second axe (A) par rapport à un bâti (16) porté par le véhicule. De manière connue, le second axe (A) est orthogonal au premier axe (I). Le support (14) est par exemple constitué d'une barre dont les extrémités cylindriques sont reçues dans deux paliers (20, figure 3) lisses conformes du bâti (16).

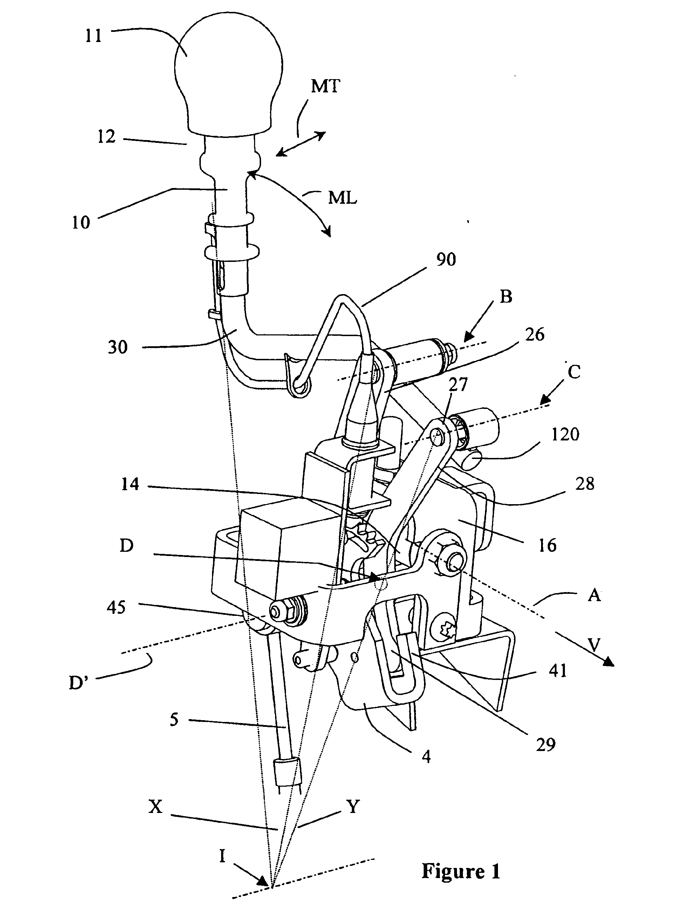

De manière connue, le levier (12) et le support (14) sont reliés par deux biellettes (26, 28) coplanaires mobiles. La biellette (26) arrière et la biellette avant (28) sont chacune articulées sur le levier (12) et sur le support (14) par des pivots supérieurs et inférieurs. Le pivot supérieur (32) et le pivot inférieur (36) de la biellette avant (28) ont des axes respectifs (C, D) parallèles entre eux ainsi qu'à l'axe (B) du pivot supérieur, respectivement l'axe du pivot inférieur, de la biellette avant. Tous ces axes (B, C, D) sont orthogonaux au second axe (A), comme illustré à la figure 1.

De cette manière, le levier (12), le support (14) et les biellettes (26, 28) forment un quadrilatère déformable dans lequel les directions des axes (X, Y) respectifs passant par les pivots d'extrémité opposés (32, 36, figure 3) de chaque biellette (26, 28) sont concourantes pour déterminer le premier axe "I" de pivotement du levier (12) sur le support (14). Le support (14) du dispositif s'étend sensiblement horizontalement et longitudinalement autour de son second axe (A) de pivotement, tandis que deux biellettes (26, 28) sont disposées du même côté du second axe (A) par rapport au support (14) de pivotement, de manière que, comme l'illustre la figure 1, le levier (12), les deux biellettes arrière (26) et avant (28), et le support (14) forment un quadrilatère déformable selon un encombrement vertical réduit dans un plan longitudinal passant par le second axe (A) d'articulation du levier (12).

Comme illustré dans les figures 1 et 3, les deux biellettes (26, 28) s'étendent en outre en avant de façon à réduire l'encombrement longitudinal entre le support (14) et l'extrémité libre (120) située à l'avant du levier (12). Une telle configuration permet d'intégrer le dispositif de l'invention dans une planche de bord (non représentée) selon un encombrement vertical et longitudinal réduit, et donc de libérer dans ladite planche de bord des espaces importants pour l'intégration d'accessoires de confort et/ou de conduite du véhicule.

En référence à la figure 1, la partie arrière de manoeuvre du levier (12), terminée par le pommeau de manoeuvre (11), comporte au moins une partie coudée (30) par rapport à la partie intermédiaire et est orientée suivant une direction (Z) concourante au premier axe (I) avec les directions des axes (X, Y) passant par les pivots (32, 36) d'extrémité opposés de chaque biellette (26, 28). Le levier (12) peut être actionné longitudinalement ou transversalement. Comme illustré à la figure 2, l'invention vise à permettre l'intégration d'une commande de boîte automatique avec commande manuelle impulsionnelle ou analogue, pour laquelle la grille de manoeuvre du levier propose par exemple une position manuelle M lorsque le levier est déplacé transversalement par rapport sa position de conduite D du mode automatique de la boîte de vitesses. Pour passer dans un tel mode, il est nécessaire de réaliser un débrayage d'au moins un câble ou organe de transmission analogue utilisé dans le mode automatique. Dans le mode manuel par commande impulsionnelle, à la différence du mode automatique, le conducteur doit pouvoir en effet commander lui-même le changement de rapport, en ayant même la possibilité, en plus de redescendre les rapports un par un, de prendre des raccourcis. Ainsi deux impulsions sur le pommeau de manoeuvre (11) vers la position - permettent par exemple de descendre de 5 en 3 (ou 4 en 2), en sautant le rapport inutile.

Les positions P, R, N, D illustrées à la figure 2 sont les positions Parking (stationnement), Reverse (marche arrière), Neutral (point mort) et Drive (conduite) classiques des boîtes automatiques. Le passage successif de la position D à la position P et inversement est réalisée par une action longitudinale sur le levier (12) de manoeuvre. En référence à la figure 1, le dispositif selon l'invention comporte un moyen de renvoi (4) du mouvement longitudinal (ML) du levier (12) pour actionner au moins un organe de transmission (5). Cet organe (5) de type câble de transmission ou analogue est relié à la partie inférieure de la boîte de vitesse pour actionner ou non l'engagement des rapports de vitesses de la boîte. Le câble de transmission (5) peut être prévu pour transmettre, via le moyen de renvoi (4), une information de position longitudinale du levier (12) correspondant à une des positions illustrées à la figure 2 : stationnement, marche arrière, point mort et conduite automatique.

Le moyen de renvoi (4) est solidaire du bâti (16) et mobile en rotation autour d'un axe (D') parallèle au premier axe (I). Dans le mode de réalisation préféré de l'invention, le moyen de renvoi (4) n'est actionnable que lorsque l'une des biellettes (26, 28) est dans une position dite d'engagement avec le moyen de renvoi (4). Cette biellette est par exemple la biellette avant (28), qui est mobile en rotation autour dudit second axe (A) entre cette position d'engagement et une position distincte de désengagement. Dans un mode de réalisation préféré de l'invention, la biellette avant (28) comporte une première extrémité (27) fixée à une partie d'extrémité avant (120) du levier (12) et une seconde extrémité (29) opposée par laquelle la première biellette (28) peut entraîner le moyen de renvoi (4). Ce dernier comporte une portion principale solidaire d'une rotule de fixation (45) ou moyen de fixation équivalent de l'organe de transmission (5) et une portion secondaire permettant de coopérer ou non par engagement avec une extrémité libre (29) de la biellette avant (28).

Comme illustré aux figures 1, 3 et 4, la position d'engagement de la biellette (28) est permise par une extrémité d'accrochage (41) du moyen de renvoi (4). Cette extrémité d'accrochage (41) a par exemple une forme sensiblement complémentaire de l'extrémité (29) opposée au levier (12) de la biellette avant (28). Dans cette position, cette extrémité (29) de la biellette fait face à au moins une zone de contact de l'extrémité d'accrochage (41) de façon à ce que la biellette avant (28) puisse entraîner en rotation le moyen de renvoi (4) lorsque le levier (12) est actionné dans une direction longitudinale. Comme illustré notamment à la figure 3, l'axe (D') de rotation du moyen de renvoi (4) est coaxial dans cette position avec l'axe (D) d'articulation de la biellette avant (28). L'extrémité d'accrochage (41) formée sur la portion secondaire du moyen de renvoi (4) comporte par exemple une portion en U en saillie pour recevoir la seconde extrémité (29) de la biellette avant (28) dans la position d'engagement.

La position de désengagement correspond à une position d'écartement de la seconde extrémité (29) de la biellette par rapport au support (14). Dans cette position de désengagement, cette extrémité (29) opposée au levier (12) est suffisamment décalée par rapport à l'extrémité d'accrochage (41) du moyen de renvoi (4) pour éviter tout contact avec ledit moyen de renvoi (4). La position de désengagement est obtenue lorsque le conducteur quitte le mode automatique de la boîte de vitesses, en positionnant par exemple le levier (12) dans la position M illustrée à la figure 2.

En référence aux figures 1 et 3, les branches de la portion en U ont un écartement déterminé pour permettre l'engagement de ladite seconde extrémité (29) avec les zones de contact intérieures de la portion en U de l'extrémité d'accrochage (41). Par ailleurs, l'épaisseur (e) de la portion en U et l'épaisseur de la seconde extrémité (29) sont sensiblement égales. La portion principale du moyen de renvoi (4) est avantageusement agencée en vis-à-vis de l'extrémité d'accrochage (41), la portion principale et l'extrémité d'accrochage (41) étant reliées par une partie incurvée. Autrement dit, le moyen de renvoi (4) comporte une portion principale parallèle à la portion secondaire formant l'extrémité d'accrochage (41). Le moyen de renvoi (4) peut être conçu d'une seule pièce et comporter une partie incurvée transversale servant à maintenir un espacement déterminé (L) entre portion principale et portion secondaire qui est suffisant pour permettre dans la position de désengagement un libre mouvement de rotation de la seconde extrémité (29) de la biellette avant (28). Un mouvement de rotation de cette biellette (28) peut donc s'effectuer dans un plan longitudinal entre la portion principale et la portion en U du moyen de renvoi (4), ledit espacement (L) étant au moins le double de l'épaisseur (e) de la portion en U.

On comprend donc que lorsque le conducteur impose au levier (12) un mouvement transversal (MT), la biellette avant (28) et son axe (D) d'articulation inférieur tournent avec le support (14) autour du second axe (A), et l'extrémité libre (29) de la biellette (28) ne se retrouve plus en face de l'extrémité d'accrochage (41) du moyen de renvoi (4). Ce dernier ne peut donc plus transmettre de mouvement longitudinal à l'organe de transmission (5). Ainsi, cet organe (5) est bien actionné le long de la ligne « PRND » illustré à la figure 2 pour la position d'engagement de la biellette (28) avec le moyen de renvoi (4), mais plus lors du passage en commande M qui correspond par exemple à une commande manuelle impulsionnelle.

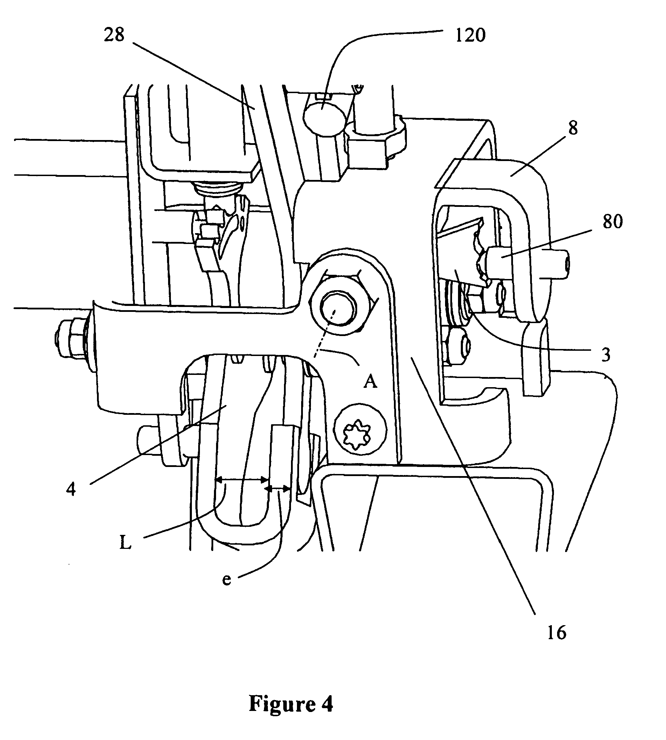

L'invention va à présent être décrite en liaison avec la figure 4.

Le support (14) monté pivotant par rapport au bâti (16) peut être muni d'un système à came entraîné via les biellettes (26, 28) par un mouvement transversal (MT) du levier (12). Ce système à came inclut une patte en saillie (3) déplaçable verticalement entre une position inférieure et une position supérieure, la position de la patte (3) pouvant être marquée physiquement à l'aide d'un système de marquage. Le bâti (16) comporte pour cela un bras (8) muni du système de marquage, par exemple disposé en face de ladite patte (3) qui s'étend transversalement par rapport au véhicule.

Dans le mode de réalisation de la figure 4, le système de marquage de position de la patte (3) comprend à l'extrémité du bras (8) un organe de billage (80) en vis-à-vis de la patte (3) agencé pour venir respectivement en appui sur l'une ou l'autre de deux zones concaves distinctes adjacentes formées à l'extrémité de ladite patte (3). La délimitation entre les deux zones concaves correspond à une arrête en saillie qui permet un blocage en position de la patte. Suivant l'exemple de la figure 4, la zone concave inférieure de la patte (3) est occupée par l'organe de billage (80) en position automatique D (la biellette avant occupant sa position d'engagement) tandis que la zone concave supérieure de la patte (3) est occupée en position manuelle M.

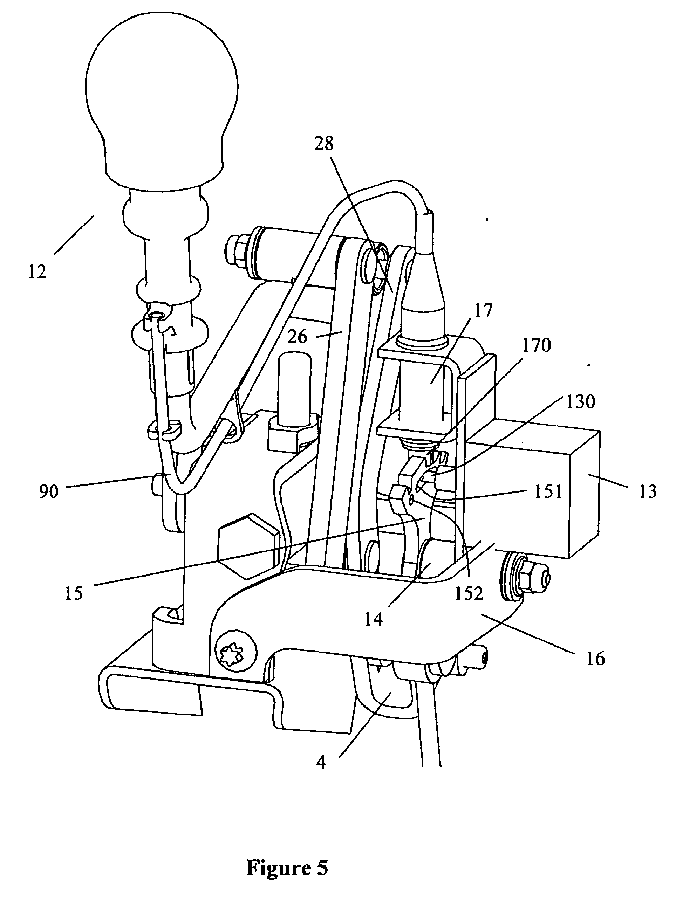

L'invention va à présent être décrite en liaison avec les figures 2 et 5.

Il est généralement demandé à la commande de vitesses d'avoir un verrouillage mécanique pour passer des positions P à R, D à N, N à R et R à P. Selon l'invention, ce type de protection peut être obtenu à l'aide de moyens de blocage en rotation prévus sur le bâti (16) pour bloquer le renvoi du mouvement longitudinal (ML) exercé sur le levier (12) par le conducteur. Ces moyens de blocage en rotation comprennent par exemple un élément de verrouillage (17) associé à une patte (15) à au moins quatre crans qui est solidaire de la portion principale du moyen de renvoi (4). Le levier (12) peut être muni d'une gâchette (10) pour tirer un câble (90) d'actionnement ou moyen d'actionnement équivalent de cet élément de verrouillage (17). Une extrémité (170) de l'élément de verrouillage (17) est mobile entre une position de verrouillage entre deux crans de la patte (15) et une position de libération lorsque le câble (90) est tiré par la gâchette (10).

Plus généralement, le moyen de renvoi (4) utilisé dans le dispositif de l'invention doit être solidaire de moyens de blocage en rotation actionnés par des organes de commande de type mécanique et/ou électromécanique. Dans le mode de réalisation de la figure 5, les moyens de blocage en rotation comprennent au moins une patte (15) reliée au moyen de renvoi (4), cette patte (15) étant bloquée par deux éléments de blocage distincts. Un premier blocage de type mécanique est effectué dans le plan longitudinal incluant la portion principale du moyen de renvoi, à l'aide dudit élément de verrouillage (17), et second blocage de type électro-mécanique est effectué transversalement par un doigt de blocage (130). La patte (15) est par exemple munie d'au moins une rainure ou lumière pour recevoir ce doigt de blocage (130) qui est actionné par un système d'électro-aimant (13). Ce système (13) est du type recevant des commandes électriques représentatives de freinage. Un appui sur le frein, qui est relié électriquement au système d'électro-aimant (13) permet d'entraîner le doigt de blocage (130) dans un mouvement de translation transversal de façon à ce que ce doigt (130) entre dans un perçage ou une lumière de la patte (15).

Comme illustré à la figure 5, la patte (15) peut comporter une lumière (151) prévue pour recevoir le doigt de blocage (130) et délimiter la course de la patte (15) par au moins une surface de butée pour le doigt de blocage (15) dans la position de passage de la position de stationnement à la position marche arrière. Un perçage (152) formant un trou ou lumière supplémentaire est prévu pour recevoir le doigt de blocage (130) dans la position de verrouillage qui correspond à la position de stationnement. Il est permis ainsi de réaliser un verrouillage électro-mécanique, appelé shiftlock, pour sortir de la position de stationnement P.

Dans un mode de réalisation de l'invention, la patte (15) comprend entre deux crans respectifs des positions de verrouillage successives correspondant à chacune des positions successives de la boîte de vitesses automatique : stationnement P, marche arrière R, point mort N et conduite automatique D. Pour passer de la position P à la position R, la double protection implique d'une part d'appuyer sur le frein de façon libérer la patte (15) du doigt de blocage (130), et d'autre part d'actionner la gâchette (10) de façon à déclencher le retrait de l'extrémité (170) de l'élément de verrouillage (17). Ainsi, ni le doigt de blocage (130) ni l'extrémité (170) de l'élément de verrouillage formant butée pour au moins un des crans adjacents ne bloquent le mouvement de rotation du moyen de renvoi (4).

Dans un mode de réalisation de l'invention, l'action de déverrouillage de la patte (15) via la gâchette (10) se fait également pour les changements D à N, N à R, et R à P. L'action électro-mécanique n'est pas nécessaire pour ces changements, le doigt de blocage (130) étant alors dans la lumière (151) de la patte (15). Naturellement, la patte (15) illustré à la figure 5 peut être remplacée par un ou plusieurs organes équivalents solidaires du moyen de renvoi (4), ces organes pouvant recevoir des éléments mobiles de blocage actionnés par le conducteur.

Dans une variante de réalisation, les autres changements de position ne nécessitent pas d'action de déverrouillage de la patte (15) car l'extrémité de cette patte est chanfreinée pour ces cas-là. Les crans de la patte (15) peuvent être ainsi chanfreinés pour faciliter la rotation de la patte (15) dans le sens opposé à l'enclenchement de la position de verrouillage correspondant à la position de stationnement P.

Un des avantages du dispositif de commande selon l'invention est de permettre de déporter le mécanisme de la boîte de vitesse en conservant une trajectoire ergonomique pour le conducteur, tout en proposant plusieurs modes de contrôle des rapports.

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus.

## Revendications

1. Dispositif de commande déportée de boîte de vitesses automatique de véhicule automobile permettant une commande manuelle, comportant un levier (12) de changement de vitesses pivotant autour d'un premier axe (I), sensiblement transversal par rapport au véhicule, sur un support (14) qui est monté pivotant, par rapport à un bâti (16) porté par le véhicule, autour d'un second axe (A) orthogonal au premier axe (I), **caractérisé en ce que** le dispositif étant du type muni de biellettes (26, 28) coplanaires pour relier le levier (12) au support (14), le levier (12) étant actionnable longitudinalement et transversalement, comportant un moyen de renvoi (4) du mouvement longitudinal (ML) du levier (12) pour actionner un organe de transmission (5), le moyen de renvoi (4) étant solidaire du bâti (16) et mobile en rotation autour d'un axe (D') parallèle au premier axe (I) et **en ce qu'**une première desdites biellettes (28) est mobile en rotation autour dudit second axe (A) entre :
- une première position d'engagement dans laquelle l'extrémité (29), opposée au levier (12), de la première biellette (28) fait face à au moins une zone de contact d'une extrémité d'accrochage (41) dudit moyen de renvoi (4) de façon à ce que la première biellette (28) puisse entraîner en rotation le moyen de renvoi (4) lorsque le levier (12) est actionné dans une direction longitudinale ; et
- une seconde position de désengagement dans laquelle l'extrémité (29) opposée au levier (12) de la première biellette (28) est suffisamment décalée par rapport à ladite extrémité d'accrochage (41) du moyen de renvoi (4) pour éviter tout contact avec ledit moyen de renvoi (4).

2. Dispositif selon la revendication 1, dans lequel la première biellette (28) comporte une première extrémité (27) fixée à une partie d'extrémité avant (120) du levier (12) et une seconde extrémité (29) opposée par laquelle la première biellette (28) entraîne le moyen de renvoi (4), ladite extrémité d'accrochage (41) comportant une portion en U en saillie pour recevoir la seconde extrémité (29) de la première biellette (28) dans la position d'engagement.

3. Dispositif selon la revendication 2, dans lequel les branches de la portion en U ont un écartement déterminé pour permettre l'engagement de ladite seconde extrémité (29) avec les zones de contact intérieures de la portion en U de l'extrémité d'accrochage (41), l'épaisseur (e) de la portion en U et l'épaisseur de la seconde extrémité (29) étant sensiblement égales.

4. Dispositif selon la revendication 2 ou 3, dans lequel le moyen de renvoi (4) comporte une portion principale solidaire d'une rotule de fixation de l'organe de transmission (5) et agencée en vis-à-vis de l'extrémité d'accrochage (41), la portion principale et l'extrémité d'accrochage (41) étant reliées par une partie incurvée et formées d'une seule pièce, la partie incurvée étant agencée pour maintenir un espacement déterminé (L) qui est suffisant pour permettre dans la position de désengagement un libre mouvement de rotation de la seconde extrémité (29) de la première biellette (28) entre la portion principale et la portion en U du moyen de renvoi (4), ledit espacement (L) étant au moins le double de l'épaisseur (e) de la portion en U.

5. Dispositif selon une des revendications 1 à 4, dans lequel l'organe de transmission est un câble prévu pour transmettre, via le moyen de renvoi (4) actionnable lorsque la première biellette (28) est dans ladite position d'engagement, une information de position longitudinale du levier (12) correspondant à une des positions suivantes : stationnement, marche arrière, point mort et conduite automatique.

6. Dispositif selon une des revendications 1 à 5, dans lequel le support (14) monté pivotant par rapport au bâti (16) est muni d'un système à came entraîné via les biellettes (26, 28) par un mouvement transversal du levier (12), le système à came incluant une patte en saillie (3) déplaçable verticalement entre une position inférieure et une position supérieure, le bâti (16) comportant un bras (8) muni d'un système de marquage de position de la patte (3).

7. Dispositif selon la revendication 6, dans lequel le système de marquage de position de la patte (3) comprend à l'extrémité du bras (8) un organe de billage (80) en vis-à-vis de la patte (3) agencé pour venir respectivement en appui sur l'une ou l'autre de deux zones concaves distinctes adjacentes formées à l'extrémité de ladite patte (3).

8. Dispositif selon une des revendications 1 à 7, dans lequel le moyen de renvoi (4) est solidaire de moyens de blocage en rotation actionnés par des organes de commande de type mécanique et/ou électromécanique.

9. Dispositif selon la revendication 8, dans lequel lesdits moyens de blocage en rotation comprennent une patte (15) à au moins quatre crans, solidaire de la portion principale du moyen de renvoi (4), le levier (12) étant muni d'une gâchette (10) pour tirer un câble (90) d'actionnement d'un élément de verrouillage (17) dont une extrémité (170) est mobile entre une position de verrouillage entre deux crans de la patte (15) et une position de libération lorsque le câble (90) est tiré par la gâchette (10).

10. Dispositif selon la revendication 8 ou 9, dans lequel lesdits moyens de blocage en rotation comprennent une patte (15) solidaire de la portion principale du moyen de renvoi (4), munie d'au moins une rainure ou lumière pour recevoir un doigt de blocage (130) actionné par un système d'électroaimant (13) du type recevant des commandes électriques représentatives de freinage.

11. Dispositif selon la revendication 10, dans lequel ladite patte (15) comprend entre deux crans respectifs des positions de verrouillage successives correspondant à chacune des positions successives suivantes : stationnement, marche arrière, point mort et conduite automatique ; la patte (15) comprenant une lumière prévue pour recevoir le doigt de blocage (130) et délimiter la course de la patte (15) par au moins une surface de butée pour le doigt de blocage (15) dans la position de passage de la position de stationnement à la position marche arrière, un trou ou lumière supplémentaire étant prévue pour recevoir le doigt de blocage dans la position de verrouillage correspondant à la position de stationnement.

12. Dispositif selon une des revendications 9 à 11, dans lequel les crans de la patte (15) sont chanfreinés pour faciliter la rotation de la patte (15) dans le sens opposé à l'enclenchement de la position de verrouillage correspondant à la position de stationnement.

## Claims

1. Device for offset control of a motor vehicle automatic gearbox allowing manual control, comprising a gearshift lever (12) pivoting about a first axis (I), generally transverse in relation to the vehicle, on a support (14) which is mounted such that it can pivot, in relation to a frame (16) carried by the vehicle, about a second axis (A) at right angles to the first axis (I), **characterized in that** the device is of the type provided with coplanar tie bars (26, 28) to connect the lever (12) to the support (14), the lever (12) being movable longitudinally and transversely, the device comprising a means of transmitting (4) the longitudinal movement (ML) of the lever (12) to operate a transmission member (5), the means of transmitting (4) being connected to the frame (16) and able to rotate about an axis (D') parallel to the first axis (I), and **in that** a first of said tie bars (28) is able to rotate about said second axis (A) between:
- a first engaged position in which the end (29), away from the lever (12), of the first tie bar (28) faces at least one contact area of a coupling end (41) of said means of transmitting (4) so that the first tie bar (28) can rotate the means of transmitting (4) when the lever (12) is moved in a longitudinal direction; and
- a second disengaged position in which the end (29), away from the lever (12), of the first tie bar (28) is sufficiently offset in relation to said coupling end (41) of the means of transmitting (4) to avoid any contact with said means of transmitting (4).

2. Device according to Claim 1, in which the first tie bar (28) comprises a first end (27) fixed to a front end portion (120) of the lever (12) and a second opposite end (29) by which the first tie bar (28) moves the means of transmitting (4), said coupling end (41) comprising a projecting U-shaped portion to receive the second end (29) of the first tie bar (28) in the engaged position.

3. Device according to Claim 2, in which the branches of the U-shaped portion have a preset gap to allow the engagement of said second end (29) with the inner contact areas of the U-shaped portion of the coupling end (41), the thickness (e) of the U-shaped portion and the thickness of the second end (29) being generally equal.

4. Device according to Claim 2 or 3, in which the means of transmitting (4) comprises a main portion connected to a ball joint of the transmission member (5) and arranged facing the coupling end (41), the main portion and the coupling end (41) being connected by a curved portion and made in a single piece, the curved portion being arranged to maintain a preset clearance (L) which is sufficient to allow in the disengaged position a free rotational movement of the second end (29) of the first tie bar (28) between the main portion and the U-shaped portion of the means of transmitting (4), said clearance (L) being at least twice the thickness (e) of the U-shaped portion.

5. Device according to one of Claims 1 to 4, in which the transmission member is a cable designed to transmit, via the means of transmitting (4) which is movable when the first tie bar (28) is in said engaged position, information regarding the longitudinal position of the lever (12) corresponding to one of the following positions: parking, reversing, neutral and automatic driving.

6. Device according to one of Claims 1 to 5, in which the support (14) mounted such that it can pivot in relation to the frame (16) is provided with a cam system moved via the tie bars (26, 28) by a transverse movement of the lever (12), the cam system including a projecting lug (3) able to be moved vertically between a lower position and an upper position, the frame (16) comprising an arm (8) provided with an indexing system for the position of the lug (3).

7. Device according to Claim 6, in which the indexing system for the position of the lug (3) includes at the end of the arm (8) a locating ball member (80) facing the lug (3) arranged to bear respectively on one or other of two distinct adjacent concave areas made at the end of said lug (3).

8. Device according to one of Claims 1 to 7, in which the means of transmitting (4) is connected to rotation blocking means operated by mechanical and/or electromechanical type control members.

9. Device according to Claim 8, in which said rotation blocking means include a lug (15) with at least four teeth, connected to the main portion of the means of transmitting (4), the lever (12) being provided with a trigger (10) to pull an operating cable (90) of a locking element (17) of which one end (170) can move between a locked position between two teeth of the lug (15) and a released position when the cable (90) is pulled by the trigger (10).

10. Device according to Claim 8 or 9, in which said rotation blocking means include a lug (15) connected to the main portion of the means of transmitting (4), provided with at least one groove or slot to receive a locking plunger (130) operated by an electromagnet system (13) of the type receiving electrical commands representative of braking.

11. Device according to Claim 10, in which said lug (15) includes between two respective teeth successive locked positions corresponding to each one of the following successive positions: parking, reversing, neutral and automatic driving; the lug (15) including a slot designed to receive the locking plunger (130) and limit the travel of the lug (15) by at least one end-stop surface for the locking plunger (130) in the position for changing from the parking position to the reversing position, an additional hole or slot being designed to receive the locking plunger in the locked position corresponding to the parking position.

12. Device according to one of Claims 9 to 11, in which the teeth of the lug (15) are chamfered to facilitate the rotation of the lug (15) in the opposite direction to the engagement of the locked position corresponding to the parking position.

## Patentansprüche

1. Vorrichtung zur versetzten Steuerung eines Kraftfahrzeug-Automatikgetriebes, das eine manuelle Steuerung erlaubt, mit einem Gangschaltungshebel (12), der um eine erste Achse (I) im Wesentlichen quer zum Fahrzeug auf einem Träger (14) schwenkt, der bezüglich eines vom Fahrzeug getragenen Gestells (16) um eine zweite Achse (A) orthogonal zur ersten Achse (I) schwenkbar montiert ist, **dadurch gekennzeichnet, dass** die Vorrichtung von der Art ist, die mit koplanaren Schwingarmen (26, 28) versehen ist, um den Hebel (12) mit dem Träger (14) zu verbinden, wobei der Hebel (12) in Längs- und Querrichtung betätigbar ist, mit einer Umlenkeinrichtung (4) der Längsbewegung (ML) des Hebels (12), um ein Übertragungsorgan (5) zu betätigen, wobei die Umlenkeinrichtung (4) fest mit dem Gestell (16) verbunden und um eine Achse (D') parallel zur ersten Achse (I) drehbeweglich ist, und dass ein erster der Schwingarme (28) um die zweite Achse (A) drehbeweglich ist zwischen:
- einer ersten Einrückstellung, in der das Ende (29) des ersten Schwingarms (28) entgegengesetzt zum Hebel (12) mindestens einer Kontaktzone eines Einhakendes (41) der Umlenkeinrichtung (4) gegenüberliegt, damit der erste Schwingarm (28) die Umlenkeinrichtung (4) in Drehung versetzen kann, wenn der Hebel (12) in einer Längsrichtung betätigt wird; und
- einer zweiten Ausrückstellung, in der das dem Hebel (12) entgegengesetzte Ende (29) des ersten Schwingarms (28) bezüglich des Einhakendes (41) der Umlenkeinrichtung (4) ausreichend weit verschoben ist, um jeden Kontakt mit der Umlenkeinrichtung (4) zu vermeiden.

2. Vorrichtung nach Anspruch 1, bei der der erste Schwingarm (28) ein erstes Ende (27), das an einem vorderen Endbereich (120) des Hebels (12) befestigt ist, und ein zweites entgegengesetztes Ende (29) aufweist, über das der erste Schwingarm (28) die Umlenkeinrichtung (4) antreibt, wobei das Einhakende (41) einen vorstehenden U-förmigen Abschnitt aufweist, um das zweite Ende (29) des ersten Schwingarms (28) in der Einrückstellung aufzunehmen.

3. Vorrichtung nach Anspruch 2, bei der die Schenkel des U-förmigen Abschnitts einen bestimmten Abstand haben, um das Einrücken des zweiten Endes (29) in die inneren Kontaktzonen des U-förmigen Abschnitts des Einhakendes (41) zu ermöglichen, wobei die Dicke (e) des U-förmigen Abschnitts und die Dicke des zweiten Endes (29) im Wesentlichen gleich sind.

4. Vorrichtung nach Anspruch 2 oder 3, bei der die Umlenkeinrichtung (4) einen Hauptabschnitt aufweist, der fest mit einem Befestigungskugelgelenk des Übertragungsorgans (5) verbunden und gegenüber dem Einhakende (41) angeordnet ist, wobei der Hauptabschnitt und das Einhakende (41) durch einen gekrümmten Bereich verbunden und aus einem Stück geformt sind, wobei der gekrümmte Bereich eingerichtet ist, um einen bestimmten Abstand (L) aufrechtzuerhalten, der ausreicht, um in der Ausrückstellung eine freie Drehbewegung des zweiten Endes (29) des ersten Schwingarms (28) zwischen dem Hauptabschnitt und dem U-förmigen Abschnitt der Umlenkeinrichtung (4) zu erlauben, wobei der Abstand (L) mindestens das Doppelte der Dicke (e) des U-förmigen Abschnitts ist.

5. Vorrichtung nach einem der Ansprüche 1 bis 4, bei der das Übertragungsorgan ein Kabel ist, das vorgesehen ist, um über die Umlenkeinrichtung (4), die betätigbar ist, wenn der erste Schwingarm (28) in der Einrückstellung ist, eine Längspositionsinformation des Hebels (12) zu übertragen, die einer der folgenden Positionen entspricht: Parken, Rückwärtsgang, Leerlauf und automatisches Fahren.

6. Vorrichtung nach einem der Ansprüche 1 bis 5, bei der der bezüglich des Gestells (16) schwenkbar montierte Träger (14) mit einem Nockensystem versehen ist, das über die Schwingarme (26, 28) durch eine Querbewegung des Hebels (12) angetrieben wird, wobei das Nockensystem eine vorstehende Lasche (3) enthält, die senkrecht zwischen einer unteren Stellung und einer oberen Stellung verschiebbar ist, wobei das Gestell (16) einen Arm (8) aufweist, der mit einem System zur Positionsmarkierung der Lasche (3) versehen ist.

7. Vorrichtung nach Anspruch 6, bei der das System zur Positionsmarkierung der Lasche (3) am Ende des Arms (8) ein Riegelkugelorgan (80) gegenüber der Lasche (3) enthält, das angeordnet ist, um auf der einen oder anderen von zwei unterschiedlichen benachbarten konkaven Zonen in Auflage zu kommen, die am Ende der Lasche (3) geformt sind.

8. Vorrichtung nach einem der Ansprüche 1 bis 7, bei der die Umlenkeinrichtung (4) fest mit Drehsperreinrichtungen verbunden ist, die von Steuerorganen vom mechanischen und/oder elektromechanischen Typ betätigt werden.

9. Vorrichtung nach Anspruch 8, bei der die Drehsperreinrichtungen eine Lasche (15) mit mindestens vier Rasten enthalten, die fest mit dem Hauptabschnitt der Umlenkeinrichtung (4) verbunden ist, wobei der Hebel (12) mit einem Auslöser (10) versehen ist, um ein Betätigungskabel (90) eines Verriegelungselements (17) zu ziehen, von dem ein Ende (170) zwischen einer Verriegelungsstellung zwischen zwei Rasten der Lasche (15) und einer Freigabestellung beweglich ist, wenn das Kabel (90) vom Auslöser (10) gezogen wird.

10. Vorrichtung nach Anspruch 8 oder 9, bei der die Drehsperreinrichtungen eine fest mit dem Hauptabschnitt der Umlenkeinrichtung (4) verbundene Lasche (15) enthalten, die mit mindestens einer Rille oder einem Langloch versehen ist, um einen Sperrfinger (130) aufzunehmen, der von einem Elektromagnetsystem (13) von der Art betätigt wird, die für das Bremsen repräsentative elektrische Steuerbefehle empfängt.

11. Vorrichtung nach Anspruch 10, bei der die Lasche (15) zwischen zwei jeweiligen Rasten aufeinanderfolgende Verriegelungsstellungen enthält, die jeder der folgenden aufeinanderfolgenden Stellungen entsprechen: Parken, Rückwärtsgang, Leerlauf und automatisches Fahren; wobei die Lasche (15) ein Langloch enthält, das vorgesehen ist, um den Sperrfinger (130) aufzunehmen und den Hub der Lasche (15) durch mindestens eine Anschlagfläche für den Sperrfinger (15) in der Stellung des Übergangs von der Parkstellung in die Rückwärtsgangstellung zu begrenzen, wobei ein zusätzliches Loch oder Langloch vorgesehen ist, um den Sperrfinger in der Verriegelungsstellung aufzunehmen, die der Parkstellung entspricht.

12. Vorrichtung nach einem der Ansprüche 9 bis 11, bei der die Rasten der Lasche (15) abgeschrägt sind, um die Drehung der Lasche (15) in Gegenrichtung zum Einkuppeln der Verriegelungsstellung entsprechend der Parkstellung zu erleichtern.
